# FASCICULE DE BREVET EUROPEEN

(11) **EP 3 174 791 B1**
(45) Date de publication et mention de la délivrance du brevet: **28.04.2021**
(21) Numéro de dépôt: 15744272.4
(22) Date de dépôt: 16.07.2015
(51) Int. Cl.: B64D 11/06

(54) **TUBE DE STRUCTURE DE TYPE HYBRIDE, NOTAMMENT POUR SIÈGE AÉRONAUTIQUE**
ROHR MIT EINER HYBRIDARTIGEN STRUKTUR, INSBESONDERE FÜR EINEN FLUGZEUGSITZ
TUBE HAVING A HYBRID-TYPE STRUCTURE, IN PARTICULAR FOR AN AIRCRAFT SEAT

(30) Priorité: 01.08.2014 FR 1457475
(43) Date de publication de la demande: 07.06.2017
(73) Titulaire: Epsilon Composite, 33340 Gaillan en Medoc (FR)
(72) Inventeur: PORTOLES, José, F-33340 Queyrac (FR); NOGUES, Dominique, F-33990 Hourtin (FR); LANDAIS, Matthieu, F-17130 Vallet (FR)
(74) Mandataire: Novagraaf Technologies
(86) Numéro de dépôt international: PCT/FR2015/051948
(87) Numéro de publication internationale: WO 2016/016538

(56) Documents cités:
- WO-A1-82/03366
- US-A1- 2004 212 243
- US-A1- 2010 196 637
- US-A1- 2013 273 287
- US-A1- 2013 307 310

## Description

La présente invention concerne un tube de structure de type hybride, notamment utilisable pour la réalisation d'une structure de sièges aéronautiques.

En aéronautique, et de façon constante, les constructeurs comme les exploitants cherchent à diminuer la masse à vide d'un avion afin de diminuer la consommation liée à la navigation de cette masse à vide.

Le carburant est un poste extrêmement important dans la rentabilité d'un avion et toute diminution de la consommation se traduit par une économie certaine.

Par contre, il est un enjeu qui ne doit pas souffrir des économies de poids, c'est la sécurité des passagers, notamment en cas d'accident.

Il est également nécessaire de conserver voire d'améliorer le confort desdits passagers.

Sachant que les utilisateurs de ce mode de transport passent la plus grande majorité du vol et de l'attente au sol en position assise; les sièges représentent une partie importante de l'étude d'un avion.

Un siège est composé d'une assise et d'un dossier pour la partie recevant directement l'utilisateur, et cet ensemble assise/dossier est reçu dans une structure S support qui est elle-même reliée au plancher de l'avion.

Si l'ensemble assise/dossier peut être agencé à partir d'un matériau de confort comme de la mousse, avec une coque en matériau composite par exemple, il n'en est pas de même pour la structure S support de ladite coque. En effet, la structure S assure l'interface entre le plancher et le ou les sièges.

Le plancher étant résistant, il convient d'ajuster la résistance du support pour qu'il puisse correspondre aux besoins définis par les normes aéronautiques en vigueur.

De plus, pour éviter tout sur accident, il faut conserver l'intégrité de la structure S en cas de choc dans ces normes prévues.

Les sièges actuellement adaptés pour répondre à ces différentes conditions et ces différentes exigences, sont réalisés dans des nuances d'alliage d'aluminium spécifiques.

La structure S comprend comme représenté sur la figure Art Antérieur des nervures 10, des longerons 12 de liaison et des pieds 14 de fixation au plancher dudit avion.

Ces nervures 10 ont une forme en L généralement de façon à recevoir l'assise 16 du siège sur la branche horizontale du L et le dosseret 18 du siège sur la partie verticale dudit L également, l'assise et le dosseret étant représentés en traits discontinus.

Ces nervures 10 reçoivent également les accoudoirs associés aux sièges, non représentés.

Les longerons 12 de liaison sont disposés pour relier mécaniquement ces nervures 10 parallèles les unes aux autres et les supporter car toutes les nervures ne possèdent pas nécessairement de pied.

Les longerons sont généralement des tubes de section circulaire, monolithiques, qui sont montés à travers des logements 20, ouverts, ménagés dans lesdites nervures.

Ces tubes sont actuellement réalisés en alliage d'aluminium spécifique, monolithique.

Cet alliage présente un avantage important qui est celui de la plasticité. Sous un impact, les tubes se déforment, sans rupture. Les tubes ne génèrent pas de tronçons libres, brisés d'un côté et susceptibles d'engendrer un risque supplémentaire de blessure pour les passagers, en cas d'accident. Le document WO8203366 présente une structure de siège d'avion présentant des tubes en carbone.

Une solution consiste à remplacer les tubes en aluminium par des tubes en carbone de façon à diminuer le poids final de la structure S.

On constate que les tubes monolithiques tout carbone ont une résistance très élevée mais sous contrainte, la rupture est totale et risque de générer des tronçons libres.

La présente invention propose. Une structure de siège d'avion, ladite structure comprenant au moins deux nervures comportant chacune au moins deux logements et au moins deux tubes, où les tubes sont des tubes hybrides passant à travers lesdits logements, chaque tube hybride comprenant un tube en carbone, monolithique et au moins un manchon en matériau ductile, rapporté et solidarisé sur ledit tube en carbone par collage ou frettage, les manchons étant disposés au droit des logements. La solidarisation du tube en carbone avec le manchon en matériau ductile par collage ou frettage permet une déformation plastique du manchon lors d'une casse du tube en carbone au droit des nervures lors d'un accident et ainsi de garantir une continuité de la structure S de siège. Avantageusement, le tube en carbone est un tube obtenu par pultrusion. Ceci permet d'avoir un tube avec de grandes précisions dimensionnelles.

Avantageusement, le manchon comporte deux chanfreins périphériques d'extrémité. Ce qui permet de diluer les contraintes à la jonction entre le manchon et le tube carbone.

Selon une première variante, le manchon est en matériau métallique, car le métal a une meilleure capacité de déformation transversale sous contrainte que le tube carbone.

Selon une disposition particulière, le matériau métallique du manchon est un alliage d'aluminium. Ce qui permet de limiter un poids du siège.

Selon une deuxième variante, le manchon est en matériau thermoplastique, rapporté et solidarisé sur ledit tube en carbone par collage, frettage ou surmoulage. Le matériau thermoplastique a une capacité de déformation transversale sous l'effort plus importante que le tube carbone.

Selon une disposition particulière, le manchon est disposé à l'extérieur du tube carbone. Il enveloppe ainsi le tube carbone.

Selon une autre disposition, le manchon est disposé à l'intérieur du tube carbone. La disposition à l'intérieur du tube permet de tenir le tube. La combinaison d'un manchon intérieur et extérieur améliore encore la tenue de l'ensemble.

Le tube selon la présente invention est maintenant décrit en détail suivant un mode de réalisation particulier, non limitatif, ceci en regard des dessins annexés qui représentent à travers les différentes figures :
- Figure Art Antérieur : une vue d'une structure S de l'art antérieur,
- Figure 1 : une vue d'un tube hybride selon la présente invention, avec un arrachement partiel sur la partie médiane du manchon,
- Figure 2 : une vue des courbes comparatives d'essais avec un tube selon la présente invention en regard d'une courbe obtenue avec un tube de l'art antérieur et une courbe à obtenir avec le tube hybride.
- Figure 3 : une vue d'une structure S agencée avec le tube hybride selon la présente invention.
- Figure 4 : une coupe du tube au droit du manchon selon une première variante,
- Figure 5 : une coupe du tube au droit du manchon selon une deuxième variante,
- Figure 6 : une coupe du tube au droit du manchon selon une troisième variante.

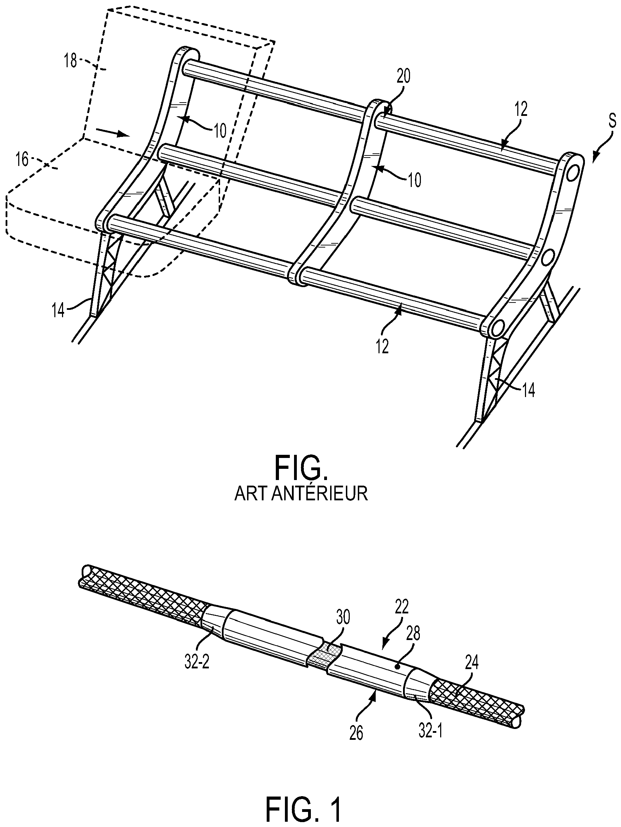

Sur la figure 1, le tube 22 hybride selon la présente invention comprend un tube 24 en carbone et au moins un manchon 26, dans les figures 1 à 4, le manchon est un manchon extérieur.

Le tube 24 en carbone est obtenu de façon préférentielle et comme dans le meilleur mode de réalisation par pultrusion de façon à bénéficier des avantages de ce procédé de fabrication.

En effet, le tube pultrudé est d'une grande précision dimensionnel, de parfaite rectitude.

De plus, les fibres peuvent être disposées avec un angle par rapport à la direction de traction adaptée, unidirectionnel, 45°, 60° en nombre souhaité, avec les diamètres et types de fibres souhaités.

Ces fibres peuvent être choisies en carbone haute résistance pour atteindre de hautes performances jusqu'à 6000MPa en résistance à la traction avec un module d'Young de 250 à 300 GPa.

La pultrusion permet également de fabriquer en continu et de pouvoir tronçonner les longueurs de tubes avec grande précision.

Chaque tube 24 utilisé est en carbone et monolithique.

Chaque manchon 26 est réalisé en matériau ductile tel qu'un matériau thermoplastique ou métallique, en l'occurrence, le matériau est un alliage d'aluminium actuellement utilisé et aux normes aéronautiques.

Les manchons 26 sont prévus au droit du logement 20 de chaque nervure 10.

Le manchon 26 est rapporté par emboîtement et monté de façon coaxiale sur le tube 24 en carbone.

Le manchon 26 est du diamètre du logement 20 de la nervure 10, au jeu d'emboîtement près.

C'est le tube 24 en carbone qui présente un diamètre extérieur égal au diamètre intérieur du manchon 26, ceci au jeu près de montage.

Chaque manchon 26 est avantageusement muni d'un orifice 28 destiné à l'injection de la colle 30 comme cela sera expliqué plus avant ou pour exercer une pression afin de favoriser l'écoulement entre le tube en carbone et ledit manchon.

Chaque manchon est en effet rapporté et solidarisé sur le tube en carbone par collage. Un autre moyen de solidarisation pourrait aussi être le frettage par exemple.

La colle est introduite à l'interface manchon/tube en carbone par tout moyen soit par injection et/ou tirage sous vide. Il convient d'assurer une répartition parfaite de la colle en une couche d'épaisseur homogène. Une colle adaptée pour ce type d'assemblage est une colle type époxy.

Ce tube 22 hybride ainsi constitué, soumis à des tests d'effort, montre une excellente résistance mécanique avec un travail de déformation mécanique plastique du manchon et une rupture du tube 24 en carbone, ceci au droit de chaque extrémité du manchon, les contraintes s'étant accumulées au droit de la périphérie dudit manchon.

Afin de pallier cet inconvénient, la présente invention propose d'amincir les extrémités de chaque manchon 26, en formant un chanfrein 32-1, 32-2 périphérique d'extrémité. Ce chanfrein est ménagé aux extrémités distales.

De préférence la pente est douce l'angle étant de l'ordre de 3°.

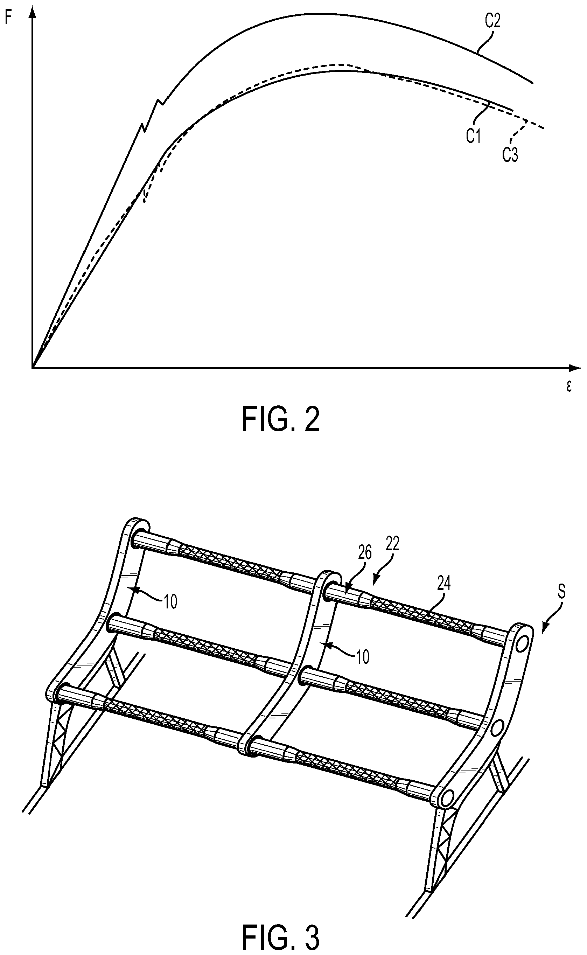

Sur les courbes de la figure 2, on a représenté la déformée ε d'un tube de liaison en alliage d'aluminium sur la courbe C1, sollicité par une charge F, à savoir un effort exercé dans le plan médian dudit manchon, perpendiculairement.

On constate une déformée plastique satisfaisante, sans rupture totale.

Sur la courbe C2, on a représenté la déformée d'un tube hybride de liaison selon la présente invention. On constate que la résistance maximale est fortement améliorée avec un manchon réalisé dans le même tube que précédemment donc avec le même alliage d'aluminium, ceci combiné avec un tube monolithique en carbone pultrudé.

On note que la déformée est également plastique du fait de la présence du manchon.

Par contre, l'examen montre une rupture du tube en carbone dans la partie médiane du manchon, c'est-à-dire que les tronçons de tube en carbone pultrudé ainsi générés ne sont pas dissociés du manchon, ce qui évite toute blessure du passager par les tronçons de tube, du fait même de cette rupture.

Ceci permet donc de bénéficier d'une forte absorption d'énergie du choc subi par le passager sur le siège, liée à la rupture de ce tube de liaison mais avec une déformée plastique liée à la déformation du manchon.

Une fois la rupture du tube composite établie, les tronçons du tube composite de part et d'autre de la rupture, restent parfaitement liés aux manchons par la colle et comme le manchon métallique reste monolithique, les extrémités ne sont pas dissociées.

Le tube selon la présente invention permet de gagner la différence de poids liée au remplacement d'une partie du tube en alliage d'aluminium par un tube en carbone, soit 15 à 20% de gain pour donner un ordre d'idée.

En plus de cela, on constate que la résistance du tube hybride selon la présente invention est fortement augmentée au-delà de ce qui est nécessaire. Il est donc possible de conserver toute la sécurité liée aux normes en vigueur tout en réduisant encore l'épaisseur des manchons et du tube en carbone de façon à respecter ladite norme.

Ceci constitue une seconde source d'économie de poids.

Ce gain de poids n'est en aucun cas une perte de sécurité mais à sécurité égale permet un gain de poids important visant à permettre des économies de consommation favorables aux passagers et favorables à l'environnement.

Ainsi, le but est de réaliser un tube hybride selon l'invention dont le profil est celui de la courbe C3.

Sur la figure 3, la structure S équipée avec les tubes 22 hybrides selon la présente invention comprend des nervures et des tubes hybrides, les manchons étant disposés au droit des nervures, qui constituent les points d'application des forces liées à un accident éventuel.

Le diamètre extérieur reste identique au diamètre de l'art antérieur pour autant que cela soit utile, seule l'épaisseur du manchon métallique est diminuée et le tube de carbone adapté.

Si le diamètre extérieur des manchons est conservé, les nervures existantes peuvent alors être également conservées avec leurs logements et leur homologation éventuelle, si cela s'avère nécessaire.

De plus, la nuance d'alliage d'aluminium peut aussi être modifiée.

Un autre avantage du fait de la faible longueur représentée par le matériau métallique dans le tube hybride selon la présente invention, il est possible de remplacer le matériau à base d'alliage d'aluminium par un autre matériau métallique comme le titane dont les propriétés peuvent être encore supérieures.

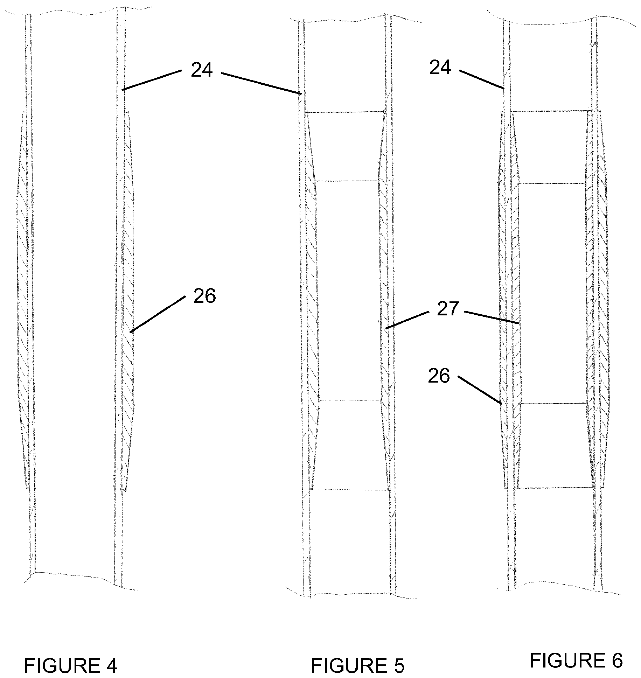

Le manchon extérieur 26 peut être remplacé (figure 5) ou complété (figure 6) par un manchon intérieur 27. Dans le cas de la figure 6, le tube 24 cumule un manchon extérieur 24 et un manchon intérieur 27 ce qui renforce la tenu du tube 24.

## Revendications

1. Structure S de siège d'avion, ladite structure comprenant au moins deux nervures (10) comportant chacune au moins deux logements (20) et au moins deux tubes (22), **caractérisée** en que les tubes (22) sont des tubes (22) hybrides passant à travers lesdits logements, chaque tube (22) hybride comprenant un tube (24) en carbone, monolithique et au moins un manchon (26, 27) en matériau ductile, rapporté et solidarisé sur ledit tube en carbone par collage ou frettage, les manchons (26, 27) étant disposés au droit des logements (20).

2. Structure S de siège d'avion, selon la revendication 1, **caractérisé en ce que** le tube (24) en carbone est un tube obtenu par pultrusion.

3. Structure S de siège d'avion, selon une des revendications 1, ou 2, **caractérisé en ce que** le manchon (26, 27) comporte deux chanfreins (32-1, 32-2) périphériques d'extrémité.

4. Structure S de siège d'avion, selon une des revendications précédentes, caractérisé ne ce que le manchon (26, 27) est en matériau métallique.

5. Structure S de siège d'avion, selon la revendication précédente, **caractérisé en ce que** le matériau métallique du manchon (26, 27) est un alliage d'aluminium.

6. Structure S de siège d'avion, selon une des revendications 1 à 3, caractérisé ne ce que le manchon (26, 27) est en matériau thermoplastique, rapporté et solidarisé sur ledit tube en carbone par collage, frettage ou surmoulage.

7. Structure S de siège d'avion, selon une des revendications précédentes, caractérisé ne ce que le manchon (26) est disposé à l'extérieur du tube carbone.

8. Structure S de siège d'avion, selon une des revendications précédentes, caractérisé ne ce que le manchon (27) est disposé à l'intérieur du tube carbone.

## Patentansprüche

1. Struktur S eines Flugzeugsitzes, wobei die Struktur mindestens zwei Rippen (10), die jeweils mindestens zwei Aufnahmen (20) aufweisen, und mindestens zwei Rohre (22) umfasst, **dadurch gekennzeichnet, dass** die Rohre (22) Hybridrohre (22) sind, die durch die Aufnahmen hindurch verlaufen, wobei jedes Hybridrohr (22) ein monolithisches Rohr (24) aus Kohlenstoff und mindestens ein Hülse (26, 27) aus formbarem Material, die an das Rohr aus Kohlenstoff angesetzt und durch Kleben oder Aufschrumpfen fest mit ihm verbunden ist, umfasst, wobei die Hülsen (26, 27) an den Aufnahmen (20) angeordnet sind.

2. Struktur S eines Flugzeugsitzes nach Anspruch 1, **dadurch gekennzeichnet, dass** das Rohr (24) aus Kohlenstoff ein durch Pultrusion erhaltenes Rohr ist

3. Struktur S eines Flugzeugsitzes nach einem der Ansprüche 1 oder 2, **dadurch gekennzeichnet, dass** die Hülse (26, 27) zwei umlaufende Endabschrägungen (32-1, 32-2) aufweist.

4. Struktur S eines Flugzeugsitzes nach einem der vorhergehenden Ansprüche, **dadurch gekennzeichnet, dass** die Hülse (26, 27) aus metallischem Material besteht.

5. Struktur S eines Flugzeugsitzes nach dem vorhergehenden Anspruch, **dadurch gekennzeichnet, dass** das metallische Material der Hülse (26, 27) eine Aluminiumlegierung ist.

6. Struktur S eines Flugzeugsitzes nach einem der Ansprüche 1 bis 3, **dadurch gekennzeichnet, dass** die Hülse (26, 27) aus thermoplastischem Material besteht und an das Rohr aus Kohlenstoff angesetzt und durch Kleben, Aufschrumpfen oder Aufformen fest mit ihm verbunden ist.

7. Struktur S eines Flugzeugsitzes nach einem der vorhergehenden Ansprüche, **dadurch gekennzeichnet, dass** die Hülse (26) außerhalb des Kohlenstoffrohres angeordnet ist.

8. Struktur S eines Flugzeugsitzes nach einem der vorhergehenden Ansprüche, **dadurch gekennzeichnet, dass** die Hülse (27) innerhalb des Kohlenstoffrohres angeordnet ist.

## Claims

1. Aircraft seat structure S, said structure comprising at least two ribs (10) each comprising at least two housings (20) and at least two tubes (22), **characterised in that** the tubes (22) are hybrid tubes (22) passing through said housings, each hybrid tube (22) comprising a monolithic carbon tube (24) and at least one sleeve (26, 27) made of a ductile material, added on to and fixed to said carbon tube by gluing or shrink-fitting, the sleeves (26, 27) being arranged in line with the housings (20).

2. An aircraft seat structure S as claimed in claim 1, **characterised in that** the carbon tube (24) is a pultruded tube.

3. An aircraft seat structure S, according to one of claims 1 or 2, **characterised in that** the sleeve (26, 27) has two peripheral end chamfers (32-1, 32-2).

4. An aircraft seat structure S according to any of the preceding claims, **characterised in that** the sleeve (26, 27) is of metallic material.

5. An aircraft seat structure S according to the preceding claim, **characterised in that** the metallic material of the sleeve (26, 27) is an aluminium alloy.

6. Aircraft seat structure S, according to one of claims 1 to 3, **characterised in that** the sleeve (26, 27) is made of thermoplastic material, added to and fixed to the said carbon tube by gluing, shrinking or overmolding.

7. An aircraft seat structure S, according to one of the preceding claims, **characterised in that** the sleeve (26) is disposed outside the carbon tube.

8. An aircraft seat structure S, according to one of the preceding claims, **characterised in that** the sleeve (27) is disposed inside the carbon tube.
